# EUROPEAN PATENT SPECIFICATION

(11) **EP 3 095 212 B1**
(45) Date of publication and mention of the grant of the patent: **08.04.2020**
(21) Application number: 15702004.1
(22) Date of filing: 14.01.2015
(51) Int. Cl.: H04L 12/18

(54) **GROUP COMMUNICATION BY RELAY**
GRUPPENKOMMUNIKATION DURCH RELAIS
COMMUNICATION DE GROUPE, PAR RELAIS

(30) Priority: 14.01.2014 GB 201400603; 23.01.2014 GB 201401141
(43) Date of publication of application: 23.11.2016
(73) Proprietor: Vodafone IP Licensing Limited, Newbury, Berkshire RG14 2FN (GB)
(72) Inventor: PUDNEY, Christopher, London W2 6BY (GB)
(74) Representative: Boult Wade Tennant LLP
(86) International application number: PCT/GB2015/050064
(87) International publication number: WO 2015/107338

(56) References cited:
- EP-A1- 1 838 034
- EP-A1- 2 391 058
- WO-A1-2006/033034
- US-A1- 2002 036 989

## Description

### Technical Field of the Invention

The invention concerns implementing group communication within a mobile telecommunications network having a plurality of mobile terminals and a device for such a mobile telecommunications network.

### Background to the Invention

Group communication, in which a transmission from one source is communicated to multiple recipients, is a desirable functionality for a mobile telecommunications network. One application of a mobile telecommunications network is for public safety use, such as emergency services. In such applications, group communications can be advantageous for sending messages from a public safety user or dispatcher or control room to multiple recipients, by means of a talk group for example. Keeping Public Safety users in contact with their dispatchers or control rooms can be of significant value, for example to allow the transmission of important messages or to provide urgent connectivity from the Public Safety user's distress or panic button.

There are situations where a mobile terminal (often referred to as a User Equipment or UE for mobile telecommunications networks) may be outside the coverage of the network. A relaying function, especially for such messages, can be useful to improve coverage. A vehicle mounted relay unit could be sufficient, but it is considered that even better coverage could be achieved if any mobile terminal (such as a handheld device) could be a UE-network relay. Implementing such relays is not straightforward, however.

For vehicle mounted devices, using a modified small cell with cellular backhaul is a possibility. However, this solution seems impractical for handheld devices that target more than 8 hours battery life, in view of the power consumption of the cell's control channels. Therefore, providing a UE-network relay, with transmit power efficiency is a concern.

An Internet Protocol (IP) level relay is considered a possible approach, but it is difficult to determine how such a relay will handle downlink transmissions to a talk group. One proposal is that each end user device receives a "talkspurt" (typically a segment of a small number of seconds, such as 3 to 10, of speech between longer silent intervals) in a separate transmission from the relay. This may be simple to specify and implement, but it poses a challenge for a large talk groups, for example a "search and rescue talk group", which may have 50 to 70 users.

EP 1838034 discloses a method for distributing multicast data of a multicast service to different domains and a method for distributing multicast data to service participants in a domain.

EP2391058 discloses a method of controlling a mobile terminal and group chat.

### Summary of the Invention

Against this background, the invention provides a method of group communication within a mobile telecommunications network having a plurality of mobile terminals in accordance with claim 1 and a method of group communication within a mobile telecommunications network having a plurality of mobile terminals in line with claim 6. A corresponding device for a mobile telecommunications network as defined by claim 15 is also provided. Other preferred features are disclosed with reference to the claims and in the description below.

The invention provides a way to reduce energy requirements and provide radio efficiency by configuring a first UE to act as a relay UE providing mobile data service to a second UE (an End UE). It may additionally or alternatively be seen as allowing multicast to be used from the relay UE. At the first UE, the following steps may be performed: receiving an identification of a multicast group from which the second UE is to receive data; identify if the first UE is a member of that multicast group; if the first UE is not a member of that multicast group, sending a request to join that multicast group; subsequently receiving data packets associated with that multicast group; and, broadcasting the received data packets (for reception by the second UE). The described methodologies have various advantages. One of them is to save energy and transmit communications between the Relay UE and the End UE in an efficient way. Another advantage is to avoid running out of radio interface capacity (between
relay UE and End UE) if there are a large number of "End UEs" in the same (talk) group using the same relay UE.

The first UE may check that the second UE is a member of the multicast group associated with a received data packet and then may only broadcast the data packet if the second UE is a member of the multicast group. In other words, the relay UE only broadcasts data packets for an End UE of which it is aware and which is a member of the multicast group. This can be extended for the case where the relay UE deals with multiple End UEs, each of which may be a member of one or more multicast groups. For example, there may be a plurality of UEs being provided service by the first UE. Then, the first UE may maintain a list of those UEs and their respective multicast groups. The first UE broadcasts data packets only if the received data packet is associated with a multicast group to which a UE in the list belongs. The term communicating is used a number of times in this disclosure and can be understood to refer to transmitting and/or receiving.

The data packets are typically distributed by an Application Server associated with the multicast group (a Group Call Application Server or GC-AS). In another aspect, the application server distributes data associated with the multicast group to the second (end) UE, preferably by communicating it to the first (relay) UE. The application server may first distribute the data to another network entity, which may be associated with the multicast group (such as a Packet Data Network Gateway, PDN GW, or a Multimedia Broadcast/Multicast Service, MBMS, gateway) for onward distribution to the second UE, typically via the relay UE.

In addition, the application server may distribute data associated with the multicast group directly to the second UE (for example, via unicast). The application server may distribute data associated with the multicast group directly to the second UE until it receives confirmation that the second UE has joined the multicast group. Conversely, the second UE may receive data associated with the multicast group (for instance, data that the UE would receive if part of the multicast group) directly from the application server (such as via a point-to-point/unicast communication between the second UE and the application server) until the second UE has joined the multicast group.

The application server may start distributing data associated with the multicast group directly to the second UE upon reception of confirmation that the second UE has requested to join the multicast group (for instance, directly from the second UE). The application server is operable to determine support for multicast operation by (i) the first UE, (ii) the second UE and/or (iii) a second network entity associated with the first UE. The second network entity may be a packet data network gateway associated with the first UE.

Once it has joined the multicast group, the second UE may receive data associated with the multicast group via the multicast group (for instance, via the first UE). In particular, the second UE may inform the application server that it has successfully joined the multicast group, and after that the application server may cease sending data associated with the multicast group via unicast (directly) to the second UE.

At the second UE, the method may comprise receiving a plurality of data packets. Then, the method may also comprise filtering out data packets which are not intended for the individual IP address of the second UE or which are not associated with the multicast group to which the second UE belongs (or is associated with). Optionally, the second UE is assigned an IP address by the first UE.

The second UE and the application server may communicate directly, for example for one or more of: authorisation and authentication; informing the second UE of an indication of the multicast group with which it should be associated, typically upon initial connection to the second UE; communicating from the second UE to the application server, information that the second UE has requested to join the multicast group; communicating from the application server to the second UE, a success level (for example, success or failure) for a request from the second UE to join the multicast group; and communicating from the second UE to the application server, an indication that the second UE has successfully joined the multicast group. The indication of the multicast group typically comprises an IP multicast address. The multicast group may be representative of the (talk) group used by the second UE such that the second UE receives for (possibly audible) presentation to a user of the UE.

### Brief Description of the Drawings

The invention may be put into practice in a number of ways, and a preferred embodiment will now be described by way of example only and with reference to the accompanying drawings, in which:
Figure 1 schematically shows a principle for operation in an embodiment of the present invention;
Figure 2 depicts a schematic of UE-network relay using Layer 3 routing, in accordance with the embodiment of Figure 1;
Figure 3 illustrates communications flow between network entities within a mobile telecommunications network in accordance with an example embodiment in line with Figure 1; and
Figure 4 shows an example communications flow between network entities within a mobile telecommunications network to enable a UE-UE relay procedure.

### Detailed Description of a Preferred Embodiment

The Third Generation Partnership Project (3GPP) have been considering group services and proximity-based services in Technical Report (TR) 23.703 v1.0.0. Some references to this document are provided below and some of this content may be better understood within the context of that document.

Typically there may be a large number of end user devices receiving data from a relay. It takes a large amount of power to send data packets separately (one to each device). The present description proposes solutions to reduce this requirement, specifically how energy savings and efficiency savings may be provided in an exemplary implementation.

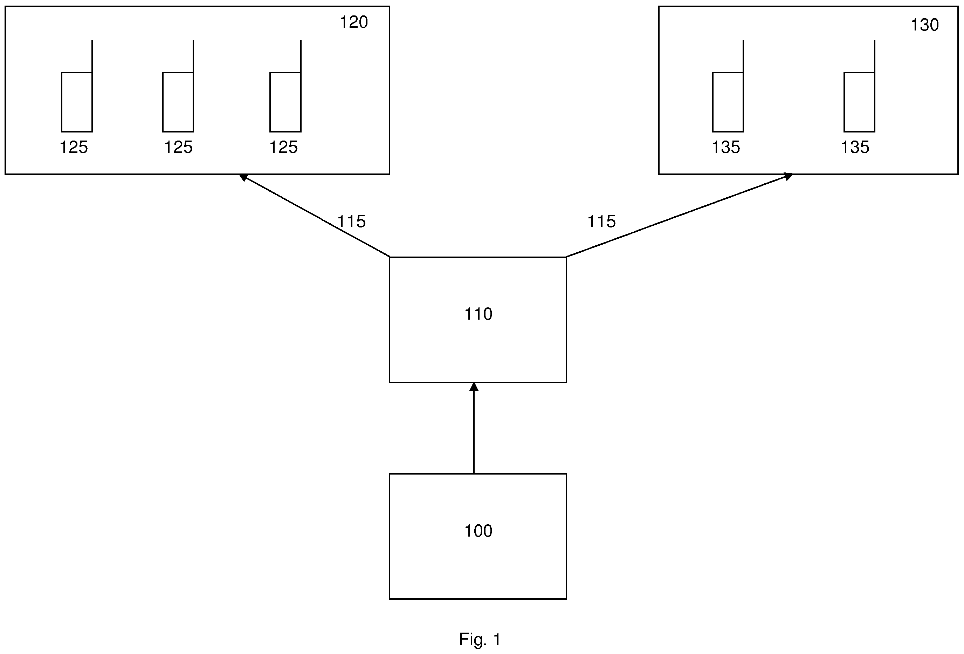

Referring first to Figure 1, there is schematically shown a principle for operation in an embodiment of the present invention. A message 100 intended for one group of user equipment (UE) is sent to a relay 110. The relay 110 broadcasts 115 the message to two groups of UEs: group one 120 comprising group one UEs 125; and group two 130 comprising group two UEs 135. It should be noted that a group may have only one UE as a member or multiple UEs as members. UEs in the group of user equipment intended to receive the message 100, for example group one 120, receive the message 100 via the broadcast 115 and process it for use. UEs in the group unintended to receive the message, for instance group two 130, filter out the message directed to the relevant group. The implementation of this approach is described in more detail below.

A multicast group is set up comprising the end UE and the relay UE, such that relay UE is part of a multicast group. The relay UE can then forward multicast messages to the UEs belonging to that group. The relay UE receives a multicast message, and broadcasts it, if there are UEs associated in that group. Subsequently, the UEs may receive from the relay UE multicast messages associated with the group to which the relay belong to, but also multicast messages associated with groups to which the UE does not belong. Therefore, UE filters the latter out. IP multicast packets will not be sent to the relay unless the relay sends a Join message to the gateway associated with the relevant packet data network.

Thus, the IP layer in the relay UE may be programmed to receive only the IP packets sent to it, plus the multicast packets sent to multicast addresses it has 'joined'. Accordingly, if the relay UE does not 'join' the correct group, then data may be discarded when (or if) it gets to the relay UE, or even the IP multicast packets may not be sent to the relay unless the relay sends the Join message to an appropriate Packet Data Network (PDN) Gateway (GW).

In a general sense and a first aspect, there may be provided a method of group communication within a mobile telecommunications network having a plurality of mobile terminals, each mobile terminal comprising (or being) a User Equipment, UE. The method comprising: receiving at a first UE of the plurality of mobile terminals, an identification of a multicast group from which a second UE of the plurality of mobile terminals is to receive data; identifying at the first UE if the first UE is a member of the multicast group; if the first UE is not a member of the multicast group, sending a request from the first UE to join the multicast group; subsequently receiving data packets associated with the multicast group at the first UE; and broadcasting the received data packets from the first UE. Optionally, the method may further comprise checking that the second UE is a member of the multicast group, the step of broadcasting only taking place if the second UE is a member of the multicast group.

This may advantageously allow relaying from the first UE to the second UE. Where there are multiple second UEs each wishing to receive a relay service from the same first UE, the multicast/broadcast functionality may be of significant benefit in efficiency. For example, there may be seventy End UEs receiving messages from the relay. Without the present invention, the relay would need to send a separate message to each individual End UE, even if the actual content of the message is actually the same. This is because each End UE may have its own decryption key to read its own message. However, this means that each End UE will receive all those 70 packets, and then discard all the packets which the UE cannot decrypt. At the same time, the relay will have to send 70 separate messages, hence resulting in inefficient communication (and possibly congestion) and wasted power.

However, with the present solution all the End UEs in the same (talk) group will join the same IP multicast session, so that the Relay UE will have only to "broadcast" one message to all the End UEs associated with the group to which that message belongs to, and the End UEs will receive only one message associated with its multicast group. In other words, only one multicast message is forwarded between the Relay UE and the End UEs if both the Relay UE and the End UEs have joined the multicast group.

For instance in some embodiments, the method may further comprise: receiving at the first UE, an identification of a multicast group from which a third UE of the plurality of mobile terminals is to receive data; identifying at the first UE if the first UE is a member of the multicast group from which the third UE is to receive data; if the first UE is not a member of the multicast group from which the third UE is to receive data, sending a request from the first UE to join the multicast group from which the third UE is to receive data; subsequently receiving data packets associated with the multicast group from which the third UE is to receive data at the first UE; and broadcasting the received data packets from the first UE. Optionally, the method may further comprise checking that the second UE and/or third UE are a member of the multicast group associated with the received data packets, the step of broadcasting only taking place if the second UE and/or the third UE are a member of the multicast group associated with the received data packets. There may therefore be a plurality of UEs being provided service by the first UE and the first UE maintains a list of those UEs and their respective multicast groups. The first UE may broadcast data packets only if the received data packet is associated with a multicast group to which a UE in the list belongs.

The multicast message may be sent encrypted. Each End UE may know how to decrypt that message because they belong to the multicast group.

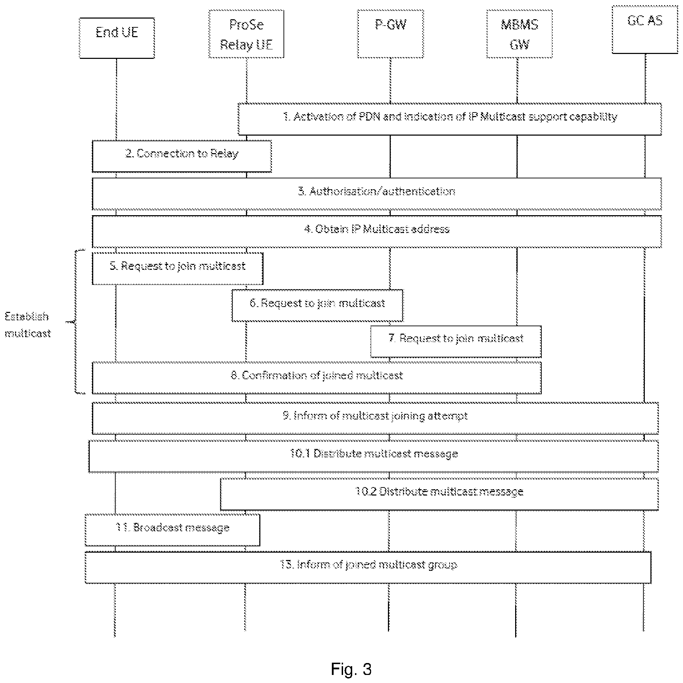

A Relay UE may belong to multiple multicast groups, and may forward a multicast message associated with a group if it identifies that there are End UEs associated with that group (for example as discussed in step 10 of the methodology with reference to Figure 3 below). This means that a UE may receive multicast messages associated with its group, but also multicast messages associated with other groups. Thus, the End UE may need to filter out those messages associated with groups other than those the End UEs has joined (as discussed with reference to step 11 of Figure 3 below). The End UE itself may be associated with multiple multicast groups, and the same applies *mutatis mutandis* in relation to each of these groups.

The first UE may receive the data packets from a network entity associated with the multicast group (examples of which will be discussed below). The network entity may receive these data packets via an application server. The data packets associated with the multicast group may therefore be distributed by an application server associated with the multicast group. The application server may be configured to cooperate with the first (relay) UE and/or second (end) UE in order to provide Quality of Service (QoS).

In a second aspect, an alternative method of group communication within a mobile telecommunications network having a plurality of mobile terminals may be considered. As with the first aspect, each mobile terminal may comprise (be) a User Equipment, UE. The method comprises: identifying at an application server associated with a multicast group that a first UE of the plurality of mobile terminals is to be used as a relay for data packets in respect of the multicast group with which a second UE of the plurality of mobile terminals is associated; and communicating data packets in respect of the multicast group to the first UE in response to the identification, for relaying to the second UE. Thus, the application server may direct data for the second (end) UE via the first (relay) UE in order to allow that data to be sent most efficiently.

In either aspect, the method may further comprise communicating (sending and/or receiving) data associated with the multicast group from the application server to the second UE directly until the second UE has joined the multicast group. As explained above and discussed in more detail below, a high QoS can be therefore be provided without loss of efficiency.

In summary, the solution provides for the relay UE (which is itself a UE, but acts as a relay for other UEs) to be part of a multicast group and to forward any multicast message associated with the multicast group for reception by the End UEs which belong to that multicast group. In this way, the End UEs may only receive one multicast message associated with their group, which may be the exact same message (content and/or encryption) that all the other End UEs in the same multicast group will receive. The Relay UE and the End UEs may be set up with the network in order to be associated with the same multicast group. The Relay UE may be already associated with a multicast group which the End UE wants to join, in which case certain steps of the method are not required (see below).

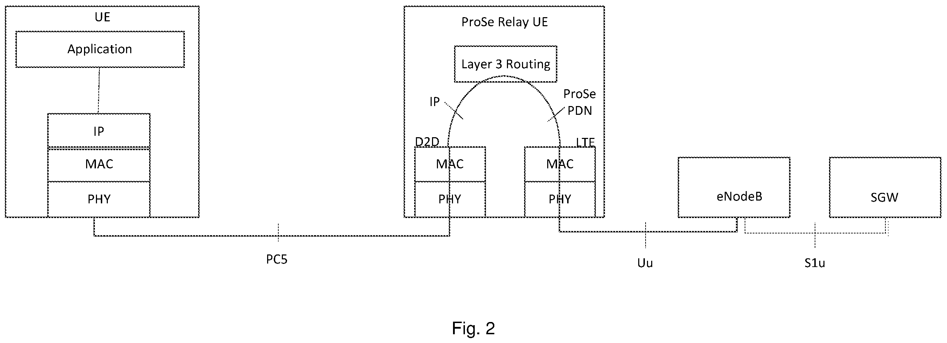

A functional description of an approach using a UE-Network relay using Layer 3 routing based on an Evolved packet system (EPS) Bearer ("lend me an EPS bearer") is now discussed, with reference to Figure 2. This is specific to a Long Term Evolution (LTE) architecture, but the skilled person will understand that its principles can be extended to other systems. In this case, a Proximity-based Services (ProSe) UE acting as a relay node carries data traffic to and/or from a ProSe UE that is out of Evolved UMTS/Universal Terrestrial Radio Access (EUTRA) coverage to and/or from an eNodeB (Evolved UMTS/Universal Terrestrial Radio Access Node B). The Layer 3 forwarding maps particular IP traffic to the EPS bearer.

The following are high level procedures for layer 3 routing.
1) Each ProSe Relay UE is part of a ProSe Relay PDN. The ProSe Relay UE is authorised or rejected to act as a Public safety (PS) Relay by its Mobility Management Entity (MME), when it attempts to activate the ProSe Relay PDN.
2) The ProSe Relay UE creates an EPS bearer or bearers for a given traffic flow towards the E-UTRAN on the ProSe Relay PDN.
3) The ProSe Relay UE identifies the uplink packet flows coming from the out-of-coverage UE, and maps them to a ProSe Relay EPS Bearer.
4) The ProSe Relay EPS bearer downlink traffic is routed to the associated UE.
5) IPv4 and IPv6 communication is achieved by creating the appropriate PDN type. In the case of IPv4 communication, the Relay UE provides the Network Address Translation (NAT).

Referring next to Figure 3, there is illustrated communications flow between network entities within a mobile telecommunications network in accordance with an example embodiment in line with Figure 1. This will be used to help provide a functional description for support of Group Communication System Enablers (GCSE) LTE with a UE-Network Relay. Again, although this approach is described as specific to this technology architecture, its operation principles can be more broadly applied.

There may be multiple ProSe UEs ("End UEs") belonging to the same talk group in contact with the one ProSe UE to Network Relay. To enable battery (and radio) efficient transmissions from the ProSe UE to network relay for this talk group the following steps occur. The reference numerals used in Figure 3 correspond with the step numbering below.
0) While in network coverage the "End UE" is configured with the contact name (Uniform Resource Locator or URL) or IP address of the Group Call Application Server.
1) The Prose Relay PDN is an intranet. Optionally, when the ProSe Relay UE activates the ProSe Relay PDN, the Protocol Configuration Options (PCO) carries an indication as to whether it supports IP Multicast. This indication may be transferred (for example via the RADIUS/Diameter SGi) to the Group Communication Application Server (GC-AS). By configuration, the GC-AS may know whether or not the Relay PDN's PDN Gateway (PGW) supports IP Multicast. The PCO is used in LTE Attach procedures and is usually included by the UE and sent to the MME to indicate an address allocation preference of the UE. Thus, the ProSe Relay UE informs the GC-AS about its capacity to support IP Multicast, and the GC-AS knows about the capacity of the Relay PDN's P-GW to support IP Multicast.
2) After the End UE contacts the Relay, the Relay UE allocates the End UE a locally significant IP address.
3) The End UE contacts the GC-AS and is authorised and authenticated (or rejected).
4a) The GC-AS informs the End UE of the IP Multicast address or addresses that its talk group is using (and - to avoid tracking -those IP multicast addresses that will be used by the talk group in the short term future). This typically occurs after GC2 communication. GC2 is the communication Interface from the GC-AS to the Broadcast/multicast service centre (BM-SC).
4b) The GC-AS notes that the End UE is using this Relay and (until step 10 below) uses unicast to distribute data to this End UE in case the relay or PDN GW does not support IP Multicast.
5) The End UE sends an Internet group management protocol (IGMP) Join (or IPv6 equivalent) to the Relay UE.
6) If the Relay UE is not already a member of that IP multicast group, the Relay UE sends the IGMP Join (as an IP packet) to the PGW serving the ProSe Relay PDN.
7) Optionally if not already a member of that IP multicast group, that PGW then sends the IGMP Join message to the Multimedia Broadcast/Multicast Service (MBMS) gateway. (A possible operator configuration is that the MBMS GW is the same logical entity as the ProSe Relay PDN's PGW.)
8) If either the ProSe Relay PDN's PGW or the ProSe Relay is already a member of that group, then (respectively) the new Relay (new End UE) is added to the PDN GW's (Relay's) IP multicast distribution tree. Optionally but less preferred as being unnecessary, the entity adding the End UE to the distribution tree may send an IP packet containing a confirmation to the End UE that it has been added to the distribution tree.
9) Across GC1 (the interface from the UE to the GC-AS), the End UE informs the GC-AS that it has requested to join the multicast distribution tree. From its knowledge (obtained in step 1), the GC-AS informs the End-UE whether the Join attempt will have failed. In this sense, the GC-AS would determine based on its knowledge of the IP Multicast support capabilities of both the ProSe Relay UE and the Relay PDN's P-GW whether the attempt of the End-UE to join the multicast is either likely to fail or has, in fact, failed. In this way, the End-UE will advantageously have knowledge of the success of its attempt in a very short time, and possibly prior to actual set-up of the IP Multicast. Therefore it may be capable of reacting more quickly and/or setting itself up in a shorter time than if this information from the GC-AS was not performed (or performed in a different manner). Also, the UE in this way may start receiving media from the GC-AS before it has successfully joined the multicast group.
10) The GC-AS sends the media on both the unicast path to the UE (10.1) and through the MBMS gateway, possibly via the BM-SC (10.2). This tries to guarantee, for example, that, while the End-UE has not yet joined the IP Multicast, but has already requested to do so, the GC-AS starts sending the media (such as talkspurts) to the End-UE via the unicast connection, as well as via the MBMS GW. In this way, the End-UE can start receiving the media before it has actually joined the IP Multicast group. The distribution of the talkspurts may also be improved by, for example, shortening the time by which the UE will receive the talkspurts, maximising the likelihood of the UE receiving the talkspurts such as by sending the talkspurts over different paths (for instance increasing diversity/likelihood of the talkspurts to be received).
11) When the Relay receives IP packets on the Relay PDN containing an IP multicast address, it checks whether it has any End UEs for that group, and if it has one or more, the Relay then 'broadcasts' that packet on the radio interface towards the End UE(s).
12) The End UEs receive all the 'broadcast' packets and, at layers above the Access Stratum, they filter out packets that are not for their individual IP address or joined IP multicast groups.
13) When an End UE receives its group's media on the IP multicast address, the End UE informs the GC-AS that it has successfully joined the multicast group.
14) The GC-AS then sends the media for that group for that UE only through the MBMS GW (possibly via the Broadcast Multicast Service Centre, BMSC).

Steps 13 and 14 may ensure that, once the End-UE has joined the IP Multicast group, the media (such as talkspurts) are sent to the End-UE only via the MBMS GW. In other words, the GC-AS may stop sending the media to the End-UE on the unicast but use only the MBMS GW (possibly via the BM-SC) to deliver the media to the End-UE.

The End UE periodically contacts the Relay UE to keep the NAT binding alive and/or renew (part of) its IP v6 address. Absence of this contact informs the Relay UE that the End UE can be removed from its multicast distribution tree.

Returning to the generalised sense of the invention discussed above, a number of optional features may now be discussed based on the detailed exemplary embodiment, which may be applied to any aspects. For example, the method may further comprise checking for receipt of a periodic contact message from the second UE at the first UE. Then, if the periodic contact message from the second UE is not received, the method may further comprise removing an indication of the second UE from a distribution tree. The distribution tree may be used in the step of broadcasting the received data packets, for determining the received data packets to be broadcast.

Preferably, the method further comprises communicating between the second UE and the application server. This communication may be direct (which may involve network entities relaying the communication, although the network entities may not necessary include the first UE). The step of communicating optionally comprises one or more of: authorisation and authentication; the application server informing the second UE of an indication of the multicast group; communicating from the second UE to the application server, information that the second UE has requested to join the multicast group; communicating from the application server to the second UE, a success level for a request from the second UE to join the multicast group; and communicating from the second UE to the application server, an indication that the second UE has successfully joined the multicast group. The indication of the multicast group preferably comprises an IP multicast address. The second UE may receive an indication of the multicast group which it should be associated with from the application server upon initial connection to the second UE.

A success level may indicate one of multiple states, some of which might indicate some form of success and one or more others a form of failure. Early in the dialogue, the Application Server can tell the End UE that the attempt to use multicast will fail (for instance, because the AS earlier learnt that the Relay UE does not support this feature). However, in the opposite case (where the Relay UE supports this feature), there is no guarantee of success for the End UE for instance, because of some lack of support on an intervening IP router. Hence, a success level may indicate a success or a failure, although a success is not necessarily the opposite of a failure in this context.

The method may further comprise activating a Packet Data Network (PDN) configuration between the first UE and the application server.

In the preferred embodiment, the method further comprises communicating an Internet Group Management Protocol (IGMP) join message from the second UE to the first UE. If the first UE is not a member of the multicast group, the method may also comprise communicating the IGMP join message from the first UE to one or both of a Packet Data Network Gateway (PDN GW) and a Multimedia Broadcast/Multicast Service (MBMS) gateway associated with the first UE.

The method may further comprise: receiving at the first UE a contact message from the second UE. Optionally, the method may comprise assigning an IP address to the second UE by the first UE, preferably in response to the contact message.

In another aspect, there may be provided a method for managing receipt of group communication data at a UE (preferably an end UE in the context discussed above). The method comprises: receiving at the UE a plurality of data packets; and filtering out data packets which are not intended for an individual IP address associated with the UE or which are not associated with a multicast group of which the UE is a member. This method may be combined with the other aspects detailed above, where the UE of this aspect is the second UE in the context of the other aspects.

It will further be understood that the methods of all aspects (generalised or specific) may be implemented by one or more devices or by a controller for such one or more devices. For example such devices may include: a UE (whether a relay UE or an end UE); an application server; and/or another network entity (examples of which are discussed herein). These devices may have structural features configured to perform one or more of the specific method steps discussed. These features may include one or more of: a transmitter; a receiver; a processor (or processors); and one or more inputs and/or outputs. Each feature may be configured to perform one or multiple steps. A controller for such features may additionally or alternatively be considered.

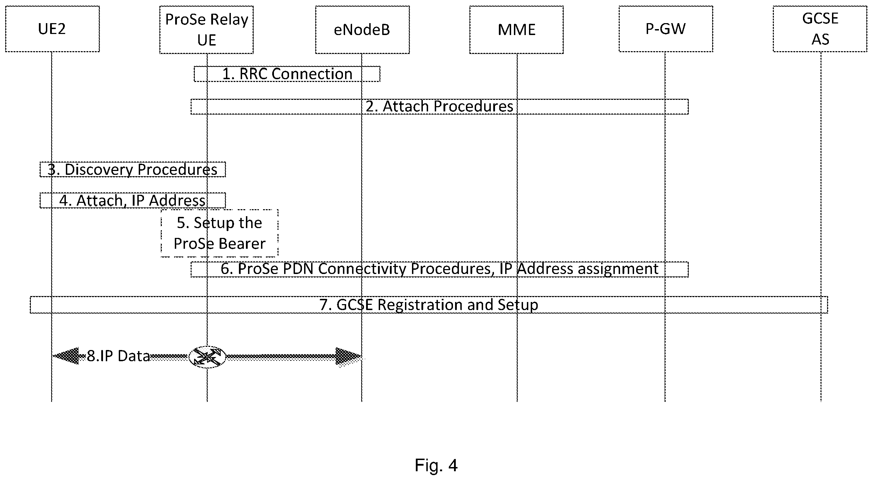

With reference to Figure 4, there is shown an example communications flow between network entities within a mobile telecommunications network to enable a UE-UE relay procedure. This will now be used to describe the procedures for setting up the relay functionality at the relay UE. The drawing assumes that the ProSe Relay UE is in network coverage and the end UE (UE2) is out of coverage.

In step1, the ProSe Relay UE establishes radio connection to the eNodeB. In step2, the ProSe Relay UE attaches to the eNodeB. The default PDN could be the ProSe PDN or could be some other PDN. In case the default PDN is the ProSe PDN, then step 6 below is optional. In step 3, the UE that is out of coverage, discovers the ProSe Relay UE. In step 4, the out-of-coverage UE attaches to ProSe Relay UE and gets an IP address. In step 5, depending the kind of traffic, the ProSe Relay UE establishes the ProSe PDN. In step 6, the ProSe Relay establishes a ProSe PDN. The PDN is either managed by the P-GW in case of coverage or could be locally established at the eNodeB. Based on the type of traffic, corresponding Quality-of-service Class Identifier (QCI) bearers are established. The ProSe PDN could be enhanced to indicate the PDN is being used for ProSe Communication. In step 7, UE2 registers to the GCSE AS through the established ProSe PDN.

Hence, the UE-to-Network Relay may focus on the following type of solutions: Application Layer Gateway (ALG) type of relay (such as references R6, R7, R8); and L3-based relay (such as references R3, R11).
The following apply for the UE-to-Network Relay: at EPS level (excluding the ProSe Function) the network perceives only one entity - the UE-to-Network Relay; Relay selection on ProSe communication 5 (PC5) takes into account information that is announced by, or solicited from, the UE-to-Network relay and that reflects a meaning such as "I can act as a relay for public safety" (other
criteria may be used for relay selection); the UE- to-Network Relay and the PDN GW it uses for relayed packets both support IP Multicast; and the procedure described above with reference to Figure 3 is used as a basis for the support of groups connected to the UE-to-Network relay.

The following documents provide context and further description of known technical features described:
1. TR 23.703 v1.0.0. Technical Specification Group Services and System Aspects; Study on architecture enhancements to support Proximity-based Services (ProSe) (Release 12)
2. TR 23.768 v1.0.0, particularly table 4.5.2. Study on Architecture to Support Group Communication System Enablers for LTE.
3. TS 22.468 v12.0.0. Group Communication System Enablers for LTE (GCSE_LTE).

Although a specific embodiment has been described, the skilled person will understand that variations and modifications are possible. For example, the specific network entities and architectures can be varied. For example, the radio link between the Relay UE and the P-GW need not be LTE: it can be based on 3G, a satellite link or Wireless LAN.

## Claims

1. A method of group communication within a mobile telecommunications network having a plurality of mobile terminals (110, 120, 130), each mobile terminal (110, 125, 135) comprising a User Equipment, UE, the method comprising:
receiving at a first UE (110) of the plurality of mobile terminals (110, 120, 130), an identification of a multicast group from which a second UE (125, 135) of the plurality of mobile terminals (110, 120, 130) is to receive data;
identifying at the first UE (110) if the first UE (110) is a member of the multicast group;
if the first UE (110) is not a member of the multicast group, sending a request from the first UE (110) to join the multicast group;
subsequently receiving data packets associated with the multicast group at the first UE (110) from an application server; and
broadcasting (115) the received data packets from the first UE (110) for reception by the second UE (125, 135).

2. The method of claim 1, further comprising:
checking that the second UE (125, 135) is a member of the multicast group, the step of broadcasting only taking place if the second UE (125, 135) is a member of the multicast group.

3. The method of claim 1 or claim 2, further comprising
receiving at the first UE (110), an identification of a multicast group from which a third UE of the plurality of mobile terminals is to receive data;
identifying at the first UE (110) if the first UE (110) is a member of the multicast group from which the third UE is to receive data;
if the first UE (110) is not a member of the multicast group from which the third UE is to receive data, sending a request from the first UE (110) to join the multicast group from which the third UE is to receive data;
subsequently receiving data packets associated with the multicast group from which the third UE is to receive data at the first UE (110); and
broadcasting the received data packets from the first UE (125, 135).

4. The method of any preceding claim, further comprising:
checking for receipt of a periodic contact message from the second UE (125, 135) at the first UE (110); and
if the periodic contact message from the second UE (125, 135) is not received, removing an indication of the second UE (125, 135) from a distribution tree, used in the step of broadcasting the received data packets, for determining the received data packets to be broadcast.

5. The method of any preceding claim, wherein the data packets associated with the multicast group are distributed by an application server associated with the multicast group.

6. A method of group communication within a mobile telecommunications network having a plurality of mobile terminals (110, 120, 130), each mobile terminal (110, 125, 135) comprising a User Equipment, UE, the method comprising:
identifying at an application server associated with a multicast group that a first UE (110) of the plurality of mobile terminals is to be used as a relay for data packets in respect of the multicast group with which a second UE (125, 135) of the plurality of mobile terminals is associated; and
communicating data packets in respect of the multicast group to the first UE (110) in response to the identification, for relaying to the second UE (125, 135).

7. The method of claim 5 or claim 6, further comprising:
communicating between the second UE (125, 135) and the application server.

8. The method of claim 7, wherein the step of communicating comprises one or more of:
authorisation and authentication;
the application server informing the second UE (125, 135) of an indication of the multicast group;
communicating from the second UE (125, 135) to the application server, information that the second UE (125, 135) has requested to join the multicast group;
communicating from the application server to the second UE (125, 135), a success level for a request from the second UE (125, 135) to join the multicast group; and
communicating from the second UE (125, 135) to the application server, an indication that the second UE (125, 135) has successfully joined the multicast group.

9. The method of claim 8, wherein the indication of the multicast group comprises an IP multicast address.

10. The method of any one of claims 5 to 9, further comprising:
communicating data associated with the multicast group from the application server to the second UE (125, 135) directly until the second UE (125, 135) has joined the multicast group.

11. The method of any one of claims 5 to 10, further comprising:
activating a Packet Data Network, PDN, configuration between the first UE (110) and the application server.

12. The method of any preceding claim, further comprising:
communicating an Internet Group Management Protocol, IGMP, join message from the second UE (125, 135) to the first UE (110).

13. The method of claim 12, further comprising:
if the first UE (110) is not a member of the multicast group, communicating the IGMP join message from the first UE (110) to one or both of a Packet Data Network Gateway, PDN GW, and a Multimedia Broadcast/Multicast Service, MBMS, gateway associated with the first UE(110), and/or
receiving at the second UE (125, 135) a plurality of data packets; and
filtering out data packets which are not intended for an individual IP address associated with the second UE (125, 135) or which are not associated with a multicast group of which the second UE (125, 135) is a member.

14. The method of any preceding claim, further comprising:
receiving at the first UE (110) a contact message from the second UE (125, 135); and
assigning an IP address to the second UE (125, 135) by the first UE (110) in response to the contact message.

15. A device for a mobile telecommunications network, configured to operate in accordance with all the steps of the method of any one of claims 1 to 14.

## Patentansprüche

1. Ein Verfahren zur Gruppenkommunikation innerhalb eines mobilen Telekommunikationsnetzes mit einer Vielzahl mobiler Endgeräte (110, 120, 130), wobei jedes mobile Endgerät (110, 125, 135) ein Benutzergerät (User Equipment, UE) umfasst, wobei das Verfahren Folgendes umfasst:
Empfangen, an einem ersten UE (110) aus der Vielzahl mobiler Endgeräte (110, 120, 130), einer Identifizierung einer Multicast-Gruppe, von der ein zweites UE (125, 135) aus der Vielzahl mobiler Endgeräte (110, 120, 130) Daten empfangen soll;
Identifizieren, an dem ersten UE (110), ob das erste UE (110) ein Mitglied der Multicast-Gruppe ist;
wenn das erste UE (110) kein Mitglied der Multicast-Gruppe ist, Senden einer Anfrage von dem ersten UE (110) zum Beitreten zu der Multicast-Gruppe;
anschließendes Empfangen von Datenpaketen im Zusammenhang mit der Multicast-Gruppe an dem ersten UE (110) von einem Anwendungsserver; und
Übertragen (115) der empfangenen Datenpakete von dem ersten UE (110) zum Empfang durch das zweite UE (125, 135).

2. Das Verfahren nach Anspruch 1, weiter umfassend:
Prüfen, ob das zweite UE (125, 135) ein Mitglied der Multicast-Gruppe ist, wobei der Schritt des Übertragens lediglich dann erfolgt, wenn das zweites UE (125, 135) ein Mitglied der Multicast-Gruppe ist.

3. Das Verfahren nach Anspruch 1 oder Anspruch 2, weiter umfassend
Empfangen, an dem ersten UE (110), einer Identifizierung einer Multicast-Gruppe, von der ein drittes UE aus der Vielzahl mobiler Endgeräte Daten empfangen soll;
Identifizieren, an dem ersten UE (110), ob das erste UE (110) ein Mitglied der Multicast-Gruppe ist, von der das dritte UE Daten empfangen soll;
wenn das erste UE (110) kein Mitglied der Multicast-Gruppe ist, von der das dritte UE Daten empfangen soll, Senden einer Anfrage von dem ersten UE (110) zum Beitreten zu der Multicast-Gruppe, von der das dritte UE Daten empfangen soll;
anschließendes Empfangen von Datenpaketen im Zusammenhang mit der Multicast-Gruppe, von der das dritte UE Daten empfangen soll, an dem ersten UE (110); und
Übertragen der empfangenen Datenpakete von dem ersten UE (125, 135).

4. Das Verfahren nach einem vorhergehenden Anspruch, weiter umfassend:
Prüfen auf Empfang einer regelmäßigen Kontaktnachricht von dem zweiten UE (125, 135) an dem ersten UE (110); und
wenn die regelmäßige Kontaktnachricht von dem zweiten UE (125, 135) nicht empfangen wird, Entfernen einer Angabe des zweiten UE (125, 135) aus einem Verteilungsbaum, der in dem Schritt des Übertragens der empfangenen Datenpakete zur Bestimmung der zu übertragenden empfangenen Datenpakete verwendet wird.

5. Das Verfahren nach einem vorhergehenden Anspruch, wobei die Datenpakete im Zusammenhang mit der Multicast-Gruppe durch einen Anwendungsserver im Zusammenhang mit der Multicast-Gruppe verteilt werden.

6. Ein Verfahren zur Gruppenkommunikation innerhalb eines mobilen Telekommunikationsnetzes mit einer Vielzahl mobiler Endgeräte (110, 120, 130), wobei jedes mobile Endgerät (110, 125, 135) ein Benutzergerät (User Equipment, UE) umfasst, wobei das Verfahren Folgendes umfasst:
Identifizieren, an einem Anwendungsserver im Zusammenhang mit einer Multicast-Gruppe, dass ein erstes UE (110) aus der Vielzahl mobiler Endgeräte als Relais für Datenpakete mit Bezug auf die Multicast-Gruppe verwendet werden soll, mit der ein zweites UE (125, 135) aus der Vielzahl mobiler Endgeräte im Zusammenhang steht; und
Kommunizieren von Datenpaketen mit Bezug auf die Multicast-Gruppe an das erste UE (110) infolge der Identifizierung, zur Weiterleitung an das zweite UE (125, 135).

7. Das Verfahren nach Anspruch 5 oder Anspruch 6, weiter umfassend:
Kommunizieren zwischen dem zweiten UE (125, 135) und dem Anwendungsserver.

8. Das Verfahren nach Anspruch 7, wobei der Schritt des Kommunizierens einen oder mehrere der folgenden umfasst:
Autorisierung und Authentifizierung;
Benachrichtigen des zweiten UE (125, 135) durch den Anwendungsserver über eine Angabe der Multicast-Gruppe;
Kommunizieren, von dem zweiten UE (125, 135) an den Anwendungsserver, einer Information, dass das zweite UE (125, 135) das Beitreten zu der Multicast-Gruppe angefordert hat;
Kommunizieren, von dem Anwendungsserver an das zweite UE (125, 135), einer Erfolgsstufe einer Anfrage von dem zweiten UE (125, 135) zum Beitreten zu der Multicast-Gruppe; und
Kommunizieren, von dem zweiten UE (125, 135) an den Anwendungsserver, einer Angabe, dass das zweite UE (125, 135) der Multicast-Gruppe erfolgreich beigetreten ist.

9. Das Verfahren nach Anspruch 8, wobei die Angabe der Multicast-Gruppe eine IP-Multicast-Adresse umfasst.

10. Das Verfahren nach einem der Ansprüche 5 bis 9, weiter umfassend:
direktes Kommunizieren von Daten im Zusammenhang mit der Multicast-Gruppe von dem Anwendungsserver an das zweite UE (125, 135), bis das zweite UE (125, 135) der Multicast-Gruppe beigetreten ist.

11. Das Verfahren nach einem der Ansprüche 5 bis 10, weiter umfassend:
Aktivieren einer Paketdatennetzkonfiguration (Packet Data Network, PDN-Konfiguration) zwischen dem ersten UE (110) und dem Anwendungsserver.

12. Das Verfahren nach einem vorhergehenden Anspruch, weiter umfassend:
Kommunizieren einer Internetgruppenverwaltungsprotokoll-Beitrittsnachricht (Internet Group Management Protocol, IGMP-Beitrittsnachricht) von dem zweiten UE (125, 135) an das erste UE (110).

13. Das Verfahren nach Anspruch 12, weiter umfassend:
wenn das erste UE (110) kein Mitglied der Multicast-Gruppe ist, Kommunizieren der IGMP-Beitrittsnachricht von dem ersten UE (110) an eine oder beide eines Paketdatennetz-Gateways (Packet Data Network Gateway, PDN GW) und eines Multimedia-Broadcast-/Multicast-Dienst-Gateways (Multimedia Broadcast/Multicast Service, MBMS-Gateway) im Zusammenhang mit dem ersten UE (110), und/oder
Empfangen, an dem zweiten UE (125, 135), einer Vielzahl von Datenpaketen; und
Herausfiltern von Datenpaketen, die nicht für eine einzelne IP-Adresse im Zusammenhang mit dem zweiten UE (125, 135) bestimmt sind oder die nicht im Zusammenhang mit einer Multicast-Gruppe stehen, bei der das zweite UE (125, 135) ein Mitglied ist.

14. Das Verfahren nach einem vorhergehenden Anspruch, weiter umfassend:
Empfangen, an dem ersten UE (110), einer Kontaktnachricht von dem zweiten UE (125, 135); und
Zuweisen einer IP-Adresse zu dem zweiten UE (125, 135) durch das erste UE (110) infolge der Kontaktnachricht.

15. Eine Vorrichtung für ein mobiles Telekommunikationsnetz, so konfiguriert, dass sie gemäß allen Schritten des Verfahrens nach einem der Ansprüche 1 bis 14 betrieben wird.

## Revendications

1. Un procédé de communication de groupe à l'intérieur d'un réseau de télécommunications mobile possédant une pluralité de terminaux mobiles (110, 120, 130), chaque terminal mobile (110, 125, 135) comprenant un équipement d'utilisateur, UE, le procédé comprenant :
la réception au niveau d'un premier UE (110) de la pluralité de terminaux mobiles (110, 120, 130), d'une identification d'un groupe de multidiffusion à partir duquel un deuxième UE (125, 135) de la pluralité de terminaux mobiles (110, 120, 130) doit recevoir des données,
l'identification au niveau du premier UE (110) si le premier UE (110) est un membre du groupe de multidiffusion,
si le premier UE (110) n'est pas un membre du groupe de multidiffusion, l'envoi d'une demande à partir du premier UE (110) de rejoindre le groupe de multidiffusion,
la réception subséquente de paquets de données associés au groupe de multidiffusion au niveau du premier UE (110) à partir d'un serveur d'applications, et
la radiodiffusion (115) des paquets de données reçus à partir du premier UE (110) destinés à une réception par le deuxième UE (125, 135).

2. Le procédé selon la Revendication 1, comprenant en outre :
la vérification que le deuxième UE (125, 135) est un membre du groupe de multidiffusion, l'opération de radiodiffusion ayant lieu uniquement si le deuxième UE (125, 135) est un membre du groupe de multidiffusion.

3. Le procédé selon la Revendication 1 ou 2, comprenant en outre :
la réception, au niveau du premier UE (110), d'une identification d'un groupe de multidiffusion à partir duquel un troisième UE de la pluralité de terminaux mobiles doit recevoir des données,
l'identification au niveau du premier UE (110) si le premier UE (110) est un membre du groupe de multidiffusion à partir duquel le troisième UE doit recevoir des données,
si le premier UE (110) n'est pas un membre du groupe de multidiffusion à partir duquel le troisième UE doit recevoir des données, l'envoi d'une demande à partir du premier UE (110) de rejoindre le groupe de multidiffusion à partir duquel le troisième UE doit recevoir des données,
la réception subséquente de paquets de données associés au groupe de multidiffusion à partir duquel le troisième UE doit recevoir des données au niveau du premier UE (110), et
la radiodiffusion des paquets de données reçus à partir du premier UE (125, 135).

4. Le procédé selon l'une quelconque des Revendications précédentes, comprenant en outre :
la vérification de la réception d'un message de contact périodique à partir du deuxième UE (125, 135) au niveau du premier UE (110), et
si le message de contact périodique à partir du deuxième UE (125, 135) n'est pas reçu, la suppression d'une indication du deuxième UE (125, 135) d'un arbre de distribution, utilisé dans l'opération de radiodiffusion des paquets de données reçus, destinée à la détermination des paquets de données reçus à radiodiffuser.

5. Le procédé selon l'une quelconque des Revendications précédentes, où les paquets de données associés au groupe de multidiffusion sont distribués par un serveur d'applications associé au groupe de multidiffusion.

6. Un procédé de communication de groupe à l'intérieur d'un réseau de télécommunications mobile possédant une pluralité de terminaux mobiles (110, 120, 130), chaque terminal mobile (110, 125, 135) comprenant un équipement d'utilisateur, UE, le procédé comprenant :
l'identification au niveau d'un serveur d'applications associé à un groupe de multidiffusion qu'un premier UE (110) de la pluralité de terminaux mobiles est à utiliser en tant que relais pour des paquets de données par rapport au groupe de multidiffusion auquel un deuxième UE (125, 135) de la pluralité de terminaux mobiles est associé, et
la communication de paquets de données par rapport au groupe de multidiffusion au premier UE (110) en réponse à l'identification, destinés à être relayer vers le deuxième UE (125, 135).

7. Le procédé selon la Revendication 5 ou 6, comprenant en outre :
une communication entre le deuxième UE (125, 135) et le serveur d'applications.

8. Le procédé selon la Revendication 7, où l'opération de communication comprend une ou plusieurs opérations parmi :
une autorisation et une authentification,
l'information par le serveur d'applications du deuxième UE (125, 135) d'une indication du groupe de multidiffusion,
la communication à partir du deuxième UE (125, 135) au serveur d'applications, d'informations signalant que le deuxième UE (125, 135) a demandé de rejoindre le groupe de multidiffusion,
la communication, du serveur d'applications au deuxième UE (125, 135), d'un niveau de succès pour une demande à partir du deuxième UE (125, 135) de rejoindre le groupe de multidiffusion, et
la communication, du deuxième UE (125, 135) au serveur d'applications, d'une indication que le deuxième UE (125, 135) a rejoint avec succès le groupe de multidiffusion.

9. Le procédé selon la Revendication 8, où l'indication du groupe de multidiffusion comprend une adresse de multidiffusion IP.

10. Le procédé selon l'une quelconque des Revendications 5 à 9, comprenant en outre :
la communication de données associées au groupe de multidiffusion du serveur d'applications au deuxième UE (125, 135) directement jusqu'à ce que le deuxième UE (125,135) ait rejoint le groupe de multidiffusion.

11. Le procédé selon l'une quelconque des Revendications 5 à 10, comprenant en outre :
l'activation d'une configuration de réseau de données en mode paquets, PDN, entre le premier UE (110) et le serveur d'applications.

12. Le procédé selon l'une quelconque des Revendications précédentes, comprenant en outre :
la communication d'un message d'invitation à rejoindre de protocole de gestion de groupe Internet, IGMP, du deuxième UE (125, 135) au premier UE (110).

13. Le procédé selon la Revendication 12, comprenant en outre :
si le premier UE (110) n'est pas un membre du groupe de multidiffusion, la communication du message d'invitation à rejoindre IGMP du premier UE (110) à une passerelle ou les deux parmi une passerelle de réseau de données en mode paquets, PDN GW, et une passerelle de service de multidiffusion/radiodiffusion multimédia, MBMS, associée au premier UE (110), et/ou
la réception au niveau du deuxième UE (125, 135) d'une pluralité de paquets de données, et
l'élimination par filtrage de paquets de données qui ne sont pas destinés à une adresse IP individuelle associée au deuxième UE (125, 135) ou qui ne sont pas associés à un groupe de multidiffusion dont le deuxième UE (125, 135) est un membre.

14. Le procédé selon l'une quelconque des Revendications précédentes, comprenant en outre :
la réception au niveau du premier UE (110) d'un message de contact à partir du deuxième UE (125, 135), et
l'affectation d'une adresse IP au deuxième UE (125, 135) par le premier UE (110) en réponse au message de contact.

15. Un dispositif destiné à un réseau de télécommunications mobile configuré de façon à fonctionner conformément à la totalité des opérations du procédé selon l'une quelconque des Revendications 1 à 14.
